Europäisches Patentamt

European Patent Office

Office européen des brevets

(11) Publication number: **0 221 866**
**B1**

(12) **EUROPEAN PATENT SPECIFICATION**

(45) Date of publication of patent specification: **08.08.90**

(21) Application number: **86850281.6**

(22) Date of filing: **28.08.86**

(51) Int. Cl.⁵: **C 05 F 9/02**

(54) **Composter for composting various organic wastes.**

(30) Priority: **04.09.85 FI 853401**

(43) Date of publication of application:
**13.05.87 Bulletin 87/20**

(45) Publication of the grant of the patent:
**08.08.90 Bulletin 90/32**

(84) Designated Contracting States:
**AT BE CH DE FR GB IT LI NL SE**

(56) References cited:
**EP-A-0 094 094**
**WO-A-82/04039**
**DE-A-3 431 049**
**GB-A- 955 338**
**GB-A-1 339 521**

(73) Proprietor: **ROLATE OY**
**Itälahdenkatu 16-18**
**SF-00210 Helsinki 21 (FI)**

(72) Inventor: **Peltomaa, Seppo**
**Sf-01860 Perttula (FI)**

(74) Representative: **Örtenblad, Bertil Tore**
**Noréns Patentbyra AB Banérgatan 73**
**S-11526 Stockholm (SE)**

## Description

The object of the present invention is a composter for composting various organic wastes.

In compost containers of prior art, the air which is indispensible for operation of the compost is conducted through separate air ducts or apertures into the composting vessel. The thermally lagged composting vessel, or composter, has been introduced in order that the composting process could be made operative also in the winter. The gases produced in the composting process (water vapour, carbon dioxide, ammonia, etc) and the superfluous air are usually, in constructions of prior art, conducted from the upper part of the vessel into the atmosphere.

In the vicinity of the air intake apertures conditions differ from those prevailing in the interior of the composting vessel, whereby the microbial activity is disturbed and completely ceases when the external air cools down. Freezing of the mass being composted also starts around the air intake apertures in wintertime. In order to ensure continuous operation of the compost, it becomes necessary from time to time to add nitrogen in water-soluble form (for instance, urea or saltpetre). This is because for maintaining microbial activity the carbon/nitrogen ratio should be within given limits. Water has to be added if the wastes to be composted are dry. Since in composters of prior art the temperature rises to adequate height in view of weed seed destruction, it is perhaps only necessary in the central part of the composter to do mixing in order to achieve a proper end result.

WO 82/04039 shows that composters with a porous heat-insulating wall is known in the art. However, WO—82/04039 does not teach how to eliminate the above mentioned drawbacks.

The object of the invention is to eliminate the drawbacks pointed out in the aforegoing.

The invention refers to a composter for composting organic wastes, comprising side walls, a bottom and a cover defining a space in which the wastes are to be placed, wherein at least the walls are of thermal lagging sheets of porous material which is permeable to air and is characterized in that on the outer surface of the cover has been attached a gas-tight and thermally well conductive surfacing material, such as an aluminium sheet.

It is essential in view of efficient operation of the composter of the invention that the air permeability of the walls is suitable. If too much air passes through the walls, the composter fails to reach adequate operating temperature and the microbial activity slows down. If on the other hand the air passes poorly through the walls, the microbes do not receive oxygen enough and their activity slows down.

With the aid of the invention sufficient air is introduced in the composter and, all the same, the temperature rises to very great height throughout the compost. Experiments have shown that the temperature rises even up to 60—70°C, at which weed roots and seeds are killed. Composting is also accomplished, owing to the high temperature, quite much faster than in any composters of prior art, and the compost that is obtained is of first grade. Experiments have shown that the compost also works perfectly in the winter in heavy cold, provided that enough waste is added.

The composter of the invention consists of a space enclosed with walls, bottom and cover, into which the wastes are placed. At least the walls of the composter consists of thermal lagging sheets permeable to air, such as underdrain plastic sheets. Experiments have shown that walls of about 10 cm are eminently suitable for a composter of about 1 m² in size. The walls pass through enough air and they keep the temperature high enough also in wintertime.

An embodiment of the invention is characterized in that the inner surface of the walls is lined with fibre fabric. Hereby any plugging of the pores in the walls with compost mass is prevented.

An advantageous embodiment of the invention is further characterized in that the outer surface of the walls is lined with fibre fabric. Hereby the composter gains sufficient strength and protection against ultraviolet light, and sunlight cannot act upon the material of the walls.

An advantageous embodiment of the invention is further characterized in that on the outer surface of the cover is attached a gas-tight, thermally well conductive surfacing material, such as an aluminium sheet.

The water vapour produced in the composting process condenses, and the water drops thus formed run along the porous, but non-waterlogging, thermal lagging back into the compost. The ammonia gas produced in the composting process, in turn, is partly solved in the downwardly running water drops and is thereby returned to the microbial flora in the compost to use, whereby the need of adding nitrogen becomes substantially less. The gas-tight cover causes enrichment of uncondensable gases under the film, whereby the partial pressure of water vapour is lowered and the condensation temperature goes down. This phenomenon reduces the risk of wall icing in the upper part of the composter.

An advantageous embodiment of the invention is further characterized in that the components of the composter consist of a composter component kit for self-assembly. Thus the parts of the composter constitute a package of minimum bulk. It is light in transport, and the composter can be easily and rapidly assembled, or disassembled, on site by the user himself. When the composter is filled to capacity, its closing tape is undone and a compost heap of cubical shape is thereby obtained.

The invention is described in the following with the aid of an example, referring to the attached drawings, wherein

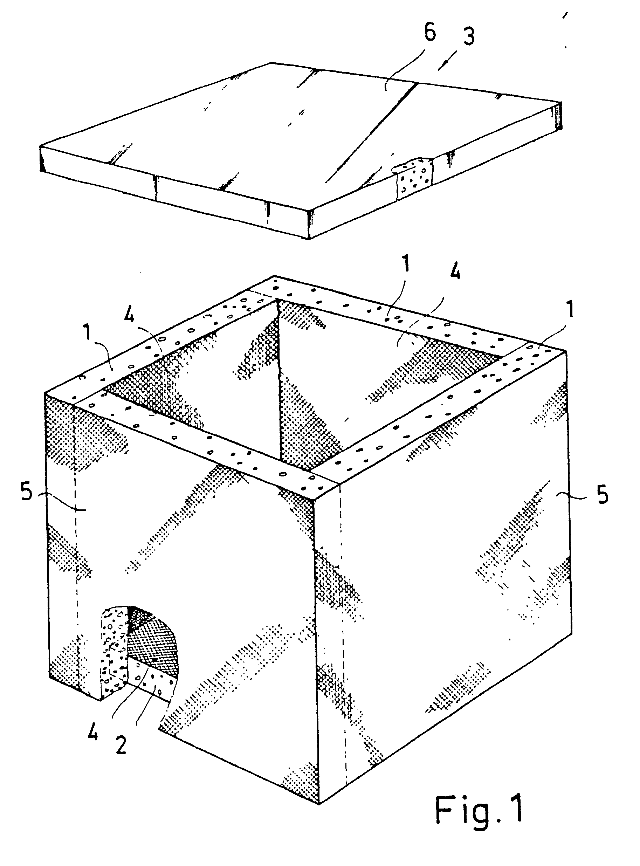

Fig. 1 presents a composter according to the invention, viewed obliquely from above and with its cover lifted off.

Fig. 2 presents the components of the composter, packaged.

Fig. 3 shows the walls of the composter after being opened out from the package.

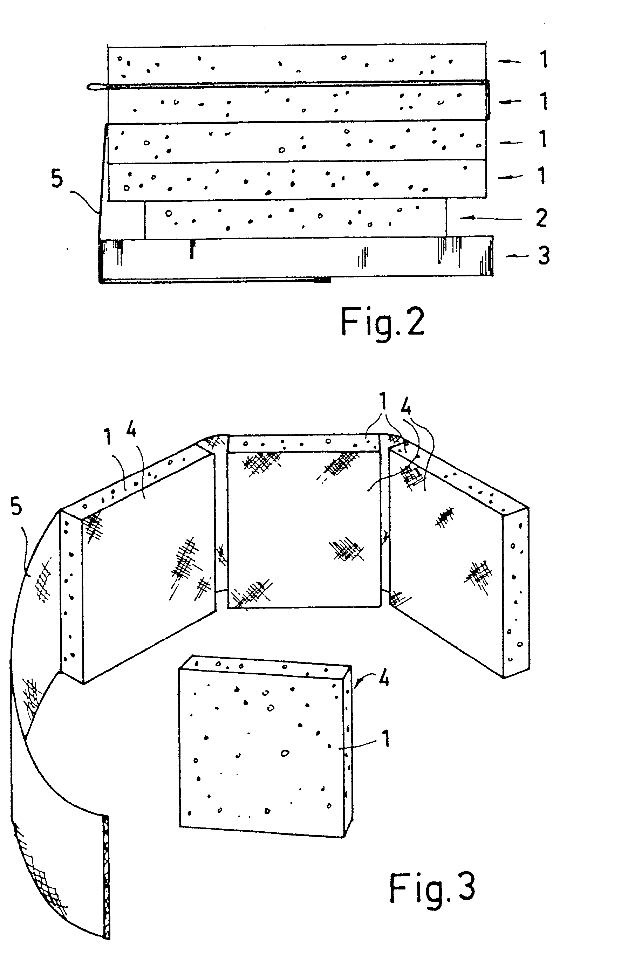

The composter consists of a space enclosed with walls 1, bottom 2 and cover 3, in which the wastes are placed. Walls, bottom and cover consist of thermal lagging sheets permeable to air, such as underdrain plastic sheets, for instance. This type of lagging sheet is also known under the name "underdrain styrox". The inner surface of the walls 1 and of the bottom have been lined with fibre fabric 4, by which the plugging of the pores with compost mass is prevented. The outer surface of the walls 1 has likewise been lined with fibre fabric 5, whereby the composter gains excellent strength and resistance against ultraviolet light. On the outer surface of the cover 3 has been attached a gas-tight and thermally well conductive surfacing material, such as an aluminium sheet 6 for instance, whereby part of the ammonia gas produced in the composting process is returned to the compost by being dissolved in the water that has condensed from the exhaust gas. The components of the composter consist of a self-assembly composter kit, depicted in Figs. 2 and 3.

It is obvious to a person skilled in the art that the invention is not confined to the example presented in the foregoing and that it may instead vary within the scope of the claims stated below.

## Claims

1. A composter for composting organic wastes, comprising side walls (1), a bottom (2) and a cover (3) defining a space in which the wastes are to be placed, wherein at least the walls (1) are of thermal lagging sheets of porous material which is permeable to air, characterized in that on the outer surface of the cover (3) has been attached a gas-tight and thermally wall conductive surfacing material, such as an aluminium sheet (6).

2. Composter according to claim 1, characterized in that the inner surface of the walls (1) is lined with fibre fabric (5).

3. Composter according to claim 1 or 2, characterized in that the outer surface of the walls (1) is lined with fibre fabric (5).

## Patentansprüche

1. Komposter zum Kompostieren von organischen Abfällen, bestehend aus Seitenwänden (1), einem Boden (2) und einem Deckel (3), einen Raum begrenzend, in den die Abfälle gelegt werden sollen, wo wenigstens die Wände (1) aus thermal verkleideten Platten eines porösen, luftdurchlässigen Materials bestehen, dadurch gekennzeichnet, daß auf der äußeren Oberfläche des Deckels (3) ein gasdichtes und gut wärmeleitendes Belagmaterial, z.B. eine Aluminiumplatte (6) angebracht ist.

2. Komposter nach Anspruch 1, dadurch gekennzeichnet, daß die innere Oberfläche der Wände (1) mit Fasertuch (5) verkleidet ist.

3. Komposter nach Anspruch 1 oder 2, dadurch gekennzeichnet, daß die äußere Oberfläche der Wände (1) mit Fasertuch (5) verkleidet ist.

## Revendications

1. Dispositif de compostage pour composter des matières ou déchets organiques, comprenant des parois latérales (1), un fond (2) et un couvercle (3) définissant un espace dans lequel les déchets doivent être placés, les parois (1) au moins du dispositif de compostage étant constituées par des feuilles de calorifugeage en matière poreuse perméable à l'air, dispositif de compostage caractérisé en ce qu'on a fixé sur la surface extérieure du couvercle (3) un matériau de revêtement de surface étanche aux gaz et thermiquement bon conducteur tel qu'une feuille d'aluminium (6).

2. Dispositif de compostage selon la revendication 1, caractérisé en ce que la surface intérieure des parois (1) est garnie d'un revêtement de tissu à base de structure fibreuse (5).

3. Dispositif de compostage selon l'une quelconque des revendications 1 et 2, caractérisé en ce que la surface extérieure des parois (1) est garnie d'un revêtement de tissu à base de structure fibreuse (5).

Fig.1

EP 0 221 866 B1

Fig.2

Fig.3